# FASCICULE DE BREVET EUROPEEN

(11) **EP 2 598 803 B1**
(45) Date de publication et mention de la délivrance du brevet: **03.06.2015**
(21) Numéro de dépôt: 11754695.2
(22) Date de dépôt: 18.07.2011
(51) Int. Cl.: F23R 3/14, F23R 3/00

(54) **SYSTEME D'INJECTION DE CARBURANT POUR TURBO-REACTEUR ET PROCEDE D'ASSEMBLAGE D'UN TEL SYSTEME D'INJECTION**
KRAFTSTOFFEINSPRITZSYSTEM FÜR EIN TL-TRIEBWERK UND VERFAHREN ZUR MONTAGE EINES DERARTIGEN EINSPRITZSYSTEMS
FUEL INJECTION SYSTEM FOR TURBOJET ENGINE AND METHOD OF ASSEMBLING SUCH AN INJECTION SYSTEM

(30) Priorité: 26.07.2010 FR 1056125
(43) Date de publication de la demande: 05.06.2013
(73) Titulaire: Snecma, 75015 Paris (FR)
(72) Inventeur: BUNEL, Jacques, Marcel, Arthur, F-77550 Moissy Cramayel Cedex (FR); DE SOUSA, Mario, César, F-77550 Moissy Cramayel Cedex (FR); SEVI, Guillaume, F-77550 Moissy Cramayel Cedex (FR); DEMOULIN, Brice, Arnaud, F-77550 Moissy Cramayel Cedex (FR)
(74) Mandataire: Camus, Olivier Jean-Claude
(86) Numéro de dépôt international: PCT/FR2011/051703
(87) Numéro de publication internationale: WO 2012/022873

(56) Documents cités:
- EP-A2- 1 508 743
- EP-A2- 1 731 837
- FR-A1- 2 903 169
- US-A- 4 999 996

## Description

### DOMAINE TECHNIQUE DE L'INVENTION

La présente invention concerne un système d'injection pour turbo-réacteur et un procédé d'assemblage d'un tel système d'injection. La présente invention concerne également une chambre de combustion comportant au moins un tel système d'injection.

### ETAT DE LA TECHNIQUE ANTERIEUR

Les chambres de combustion des turbo-réacteurs comprennent généralement une paroi intérieure et une paroi extérieure reliées à leurs extrémités amont par un fond annulaire pour définir un fond de chambre de combustion annulaire. Des systèmes d'injection régulièrement répartis sur la périphérie du fond de la chambre de combustion délivrent un mélange d'air et de carburant qui est enflammé pour fournir des gaz de combustion.

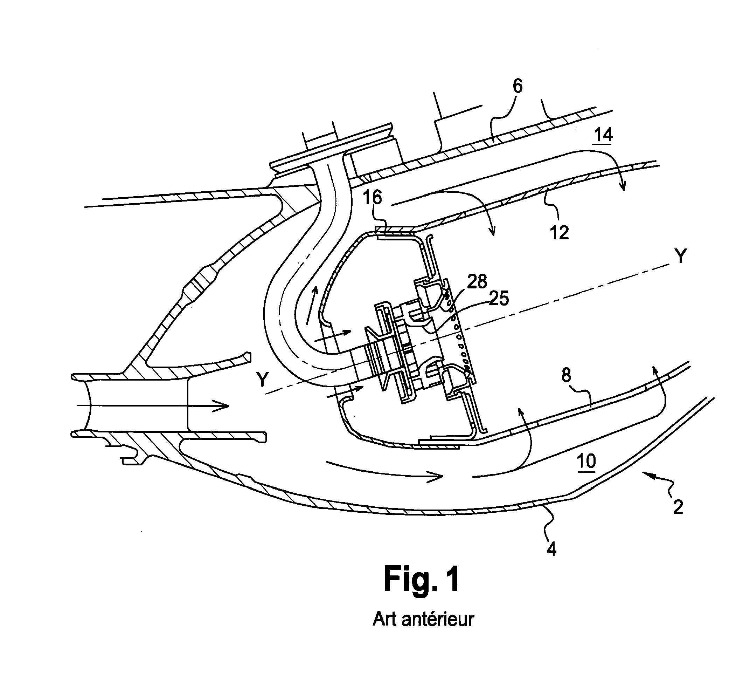

La figure 1 représente une vue schématique partielle d'une telle chambre de combustion de l'art antérieur. La chambre de combustion 2 présente une forme de symétrie longitudinale de révolution par rapport à un axe général de la turbine. Elle comporte une paroi de carter intérieure 4 et une paroi de carter extérieure 6. Une paroi de chambre intérieure 8 délimite un passage 10 avec la paroi de carter intérieure 4 et une paroi de chambre extérieure 12 délimite un passage 14 avec la paroi de carter extérieure 6.

Les parois de chambre intérieure 8 et extérieure 12 sont réunies par un fond de chambre 16 à leurs extrémités amont. Une pluralité de systèmes d'injection 1, typiquement quatorze à vingt-deux, régulièrement espacés angulairement (un seul système d'injection a été représenté sur la figure 1) sont prévus sur le fond de chambre 16.

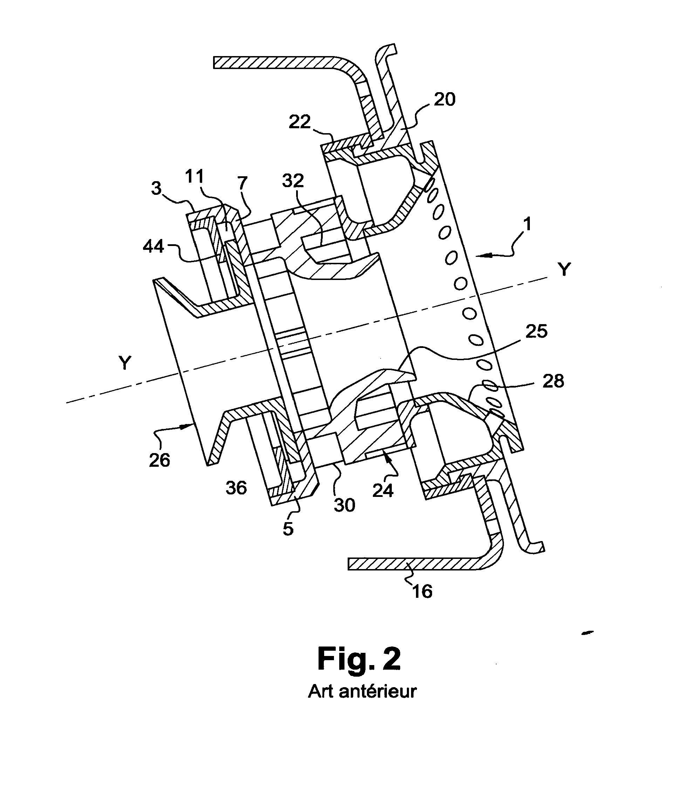

Comme on peut le voir plus en détail sur la figure 2, chaque système d'injection 1 comprend une partie fixe 3 qui comporte une cavité 11 délimitée par un fond 7, une paroi latérale 5 et une coupelle de fermeture 44. Le fond 7 présente une forme de bague, tout comme la coupelle de fermeture 44. La paroi latérale 5 présente une forme cylindrique autour d'un axe de référence Y. La partie fixe 3 comporte également une vrille 24, un venturi 25 et d'un bol 28. Le fond 7 forme un épaulement en saillie radiale de la vrille 24. La vrille 24 est montée sur le bol 28. Le bol 28 est raccordé au fond de chambre 16 par l'intermédiaire d'un déflecteur 20 et de deux demi bagues 22. La vrille 24 comporte un premier étage d'ailettes ou pales 30, et un deuxième étage d'ailettes ou de pales 32 qui ont pour fonction d'entraîner l'air en rotation autour de l'axe de référence Y du système d'injection. Les ailettes ou pales des étages 30 et 32 peuvent être de même sens ou de sens contraire. La partie fixe 3 s'étend autour de l'axe de référence Y et elle présente une symétrie de révolution autour de cet axe.

Un jeu relativement important est prévu entre la surface supérieure de la semelle 36 de la traversée coulissante 26 et la coupelle de fermeture 44. Ce jeu permet de garantir la mobilité radiale de la traversée 26 et d'accommoder les tolérances de fabrication lorsque l'on monte la chambre de combustion sur les injecteurs.

Une chambre de combustion pourvue d'un tel système d'injection est par exemple décrite dans le document EP1731837. Un système d'injection selon le préambule de la revendication 1 est montré dans le document US 4 999 996 A.

Toutefois, avec une telle chambre de combustion équipée de ce système d'injection, le demandeur a constaté que le nez de l'injecteur présentait une usure importante et une durée de vie réduite.

### EXPOSE DE L'INVENTION

L'invention vise à remédier au moins en partie aux inconvénients de l'état de la technique en proposant un système d'injection qui permette de limiter l'usure du nez de l'injecteur.

Pour ce faire, est proposé selon un premier aspect de l'invention un système d'injection de carburant pour turbo-réacteur comportant une partie fixe et une traversée coulissante, la partie fixe et la traversée coulissante s'étendant suivant un axe de référence, la partie fixe comportant une cavité délimitée axialement par un fond et une coupelle de fermeture, la traversée coulissante étant pourvue d'une semelle contenue dans la cavité, le système d'injection comportant en outre des moyens de ressort disposés dans la cavité de façon à exercer un effort axial sur la semelle.

Ainsi, au contraire des systèmes d'injection de l'art antérieur, le système d'injection selon l'invention comporte des moyens de ressorts qui sont précontraints dans la cavité au montage et qui plaquent la semelle de la traversée coulissante contre le fond de la cavité ou contre la coupelle de fermeture de façon à empêcher les vibrations, en fonctionnement, de la traversée coulissante dans la cavité. En effet, en empêchant la traversée coulissante de se débattre dans la cavité, on limite l'usure du nez d'injecteur qui est inséré dans la traversée coulissante et on augmente donc la durée de vie du système. Toutefois, les moyens de ressort sont précontraints de façon à permettre à la traversée coulissante de se déplacer radialement dans la cavité pour tolérer les dilatations différentielles de l'injecteur et du système d'injection. Ainsi, les moyens de ressort permettent de supprimer les vibrations de la traversée coulissante dans la cavité, tout en autorisant les déplacements radiaux la traversée coulissante dans la cavité pour tolérer les dilatations thermiques différentielles.

Les moyens de ressort sont donc aptes à interdire les micro-déplacements vibratoires de la traversée coulissante par rapport à la partie fixe.

Le système d'injection selon l'invention peut également présenter une ou plusieurs des caractéristiques ci-dessous, considérées individuellement ou selon toutes les combinaisons techniquement possibles.

Selon un mode de réalisation préférentiel, les moyens de ressort sont contraints axialement dans la cavité. Les moyens de ressort permettent de préférence à la traversée coulissante de se déplacer radialement dans la cavité, tout en la bloquant axialement.

Selon un mode de réalisation préférentiel, les moyens de ressort comportent une lamelle ondulée.

Avantageusement, la lamelle ondulée est circulaire.

Avantageusement, la lamelle ondulée présente une symétrie de révolution par rapport à l'axe de référence.

Avantageusement, la lamelle ondulée est formée d'un alliage comportant du nickel et du chrome.

Selon différents modes de réalisation :
- la lamelle ondulée présente un diamètre extérieur sensiblement égal au diamètre intérieur de la cavité, de sorte que la lamelle ondulée est en contact avec les parois latérales de la cavité ;
- la lamelle ondulée présente un diamètre extérieur inférieur au diamètre intérieur de la cavité, de sorte que la lamelle ondulée est à distance des parois latérales de la cavités.

Avantageusement, la traversée coulissante comporte un cône de centrage et la lamelle ondulée présente en son centre un orifice de diamètre intérieur supérieur au diamètre extérieur du cône de centrage de la traversée coulissante, de façon à ce que cet orifice permette le passage de la lamelle ondulée autour du cône de centrage lors du montage.

Selon un autre mode de réalisation, les moyens de ressorts sont constitués d'un ressort en spirale de section rectangulaire. Le ressort en spirale présente de préférence une symétrie de révolution par rapport à l'axe de référence.

Avantageusement, la cavité est délimité radialement par des parois latérales. Ces parois latérales présentent de préférence une symétrie de révolution autour de l'axe de référence.

Le système d'injection selon l'invention comporte en outre, de préférence, une rondelle disposée entre les moyens de ressort et la semelle. Cette rondelle permet aux moyens de ressort d'avoir une portée franche sur la semelle quelle que soit la position de la traversée coulissante. En outre, cette rondelle permet aux moyens de ressort de ne pas être en contact direct avec la traversée coulissante qui est mobile. Par ailleurs, la rondelle empêche les moyens de ressort de se coincer entre la traversée coulissante et les parois latérale de la cavité.

La rondelle présente de préférence un diamètre extérieur sensiblement égal au diamètre intérieur de la cavité, de sorte que la rondelle est en contact avec les parois latérales de la cavité. Ainsi, les moyens de ressort ne peuvent pas se coincer entre les parois de la cavité et la semelle.

Avantageusement, les moyens de ressort sont contraints axialement entre la rondelle et la coupelle de fermeture.

Avantageusement, les moyens de ressort exercent sur la semelle un effort compris entre 10 Newtons et 30 Newtons. En effet, les moyens de ressort doivent exercer sur la semelle un effort suffisamment important pour éviter que la traversée coulissante ne vibre. Par contre l'effort exercé par les moyens de ressort doit permettre à la traversée coulissante de se déplacer radialement pour permettre le montage de l'injecteur et permette au système d'injection, en fonctionnement, de s'adapter aux dilatations thermiques différentielles, notamment de l'injecteur qui est inséré dans la traversée coulissante.

Un autre objet de l'invention est de proposer une chambre de combustion dans laquelle le nez de l'injecteur présente une durée de vie améliorée.

A cet effet, est proposé, selon un deuxième aspect de l'invention, une chambre de combustion comportant au moins un système d'injection selon l'invention, la traversée coulissante comportant en outre un cône de centrage dans lequel est inséré un injecteur de carburant.

Un autre objet de l'invention est de proposer un moteur d'aéronef qui présente une durée de vie améliorée.

A cet effet, un troisième aspect de l'invention concerne un moteur d'aéronef qui comporte une chambre de combustion selon le deuxième aspect de l'invention.

Un autre objet de l'invention est de proposer un procédé d'assemblage d'un système d'injection tolérant aux dilatations thermiques différentielles et tolérances d'usinage qui présente une résistante à l'usure et une durée de vie améliorée.

Pour ce faire, est proposé selon un quatrième aspect de l'invention, un procédé d'assemblage d'un système d'injection comportant une partie fixe et une traversée coulissante, la partie fixe comportant un logement présentant un fond, la traversée coulissante comportant une semelle, le procédé comportant les étapes suivantes :
- (a) Mise en place de la traversée coulissante sur la partie fixe de façon à ce que la semelle soit en appui sur le fond du logement ;
- (b) Mise en place des moyens de ressort; et
- (c) Fixation d'une coupelle de fermeture sur le logement de façon à former une cavité dans laquelle les moyens de ressort sont contraints axialement.

Avantageusement, le procédé comporte en outre, entre les étapes (a) et (b), l'étape suivante :
- (a') Mise en place d'une rondelle sur la semelle.

### BREVE DESCRIPTION DES FIGURES

D'autres caractéristiques et avantages de l'invention ressortiront à la lecture de la description qui suit, en référence aux figures annexées, qui illustrent :
- la figure 1, une vue générale en coupe d'une chambre de combustion d'un turbo-réacteur comportant un système d'injection de l'art antérieur ;
- la figure 2, une vue générale en coupe à échelle agrandie du système d'injection de la figure 1 ;
- la figure 3, une vue générale en coupe d'une chambre de combustion d'un turbo-réacteur comportant un système d'injection selon l'invention ;
- la figure 4, une vue générale en coupe à échelle agrandie d'un système d'injection selon l'invention ;
- la figure 5, une vue générale en perspective à échelle agrandie du système d'injection de la figure 4 ;
- les figures 6a à 6d, des vues générales en perspective à échelle agrandie des étapes d'un procédé d'assemblage selon l'invention.

Pour plus de clarté, les éléments identiques ou similaires sont repérés par des signes de référence identiques sur l'ensemble des figures.

### DESCRIPTION DETAILLEE D'AU MOINS UN MODE DE REALISATION

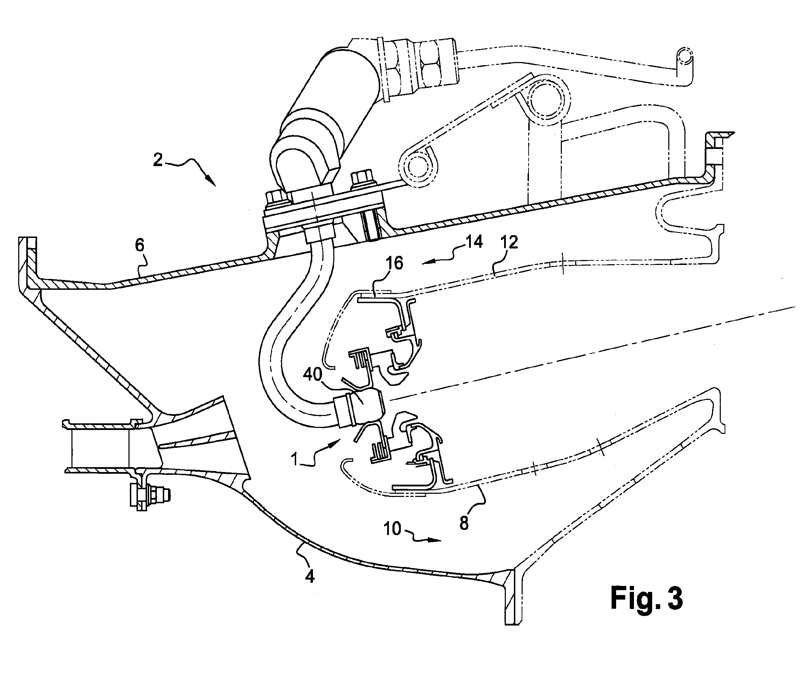

La figure 3 représente une vue schématique partielle, en coupe, d'une chambre de combustion de turbo-réacteur selon l'invention désignée par la référence générale 2. Cette chambre de combustion comporte un système d'injection 1 conforme à la présente invention.

La chambre de combustion 2 présente une forme de symétrie longitudinale de révolution par rapport à un axe général de la turbine. La chambre de combustion comporte une paroi de carter intérieure 4 et une paroi de carter extérieure 6. Une paroi de chambre intérieure 8 délimite un passage 10 avec la paroi de carter intérieure 4 et une paroi de chambre extérieure 12 délimite un passage 14 avec la paroi de carter extérieure 6.

Les parois de chambre intérieure 8 et extérieure 12 sont réunies par un fond de chambre 16 à leurs extrémités amont. Une pluralité de système d'injection 1, typiquement quatorze à vingt-deux, régulièrement espacés angulairement (un seul système d'injection a été représenté sur la figure 3) sont prévus sur le fond de chambre 16.

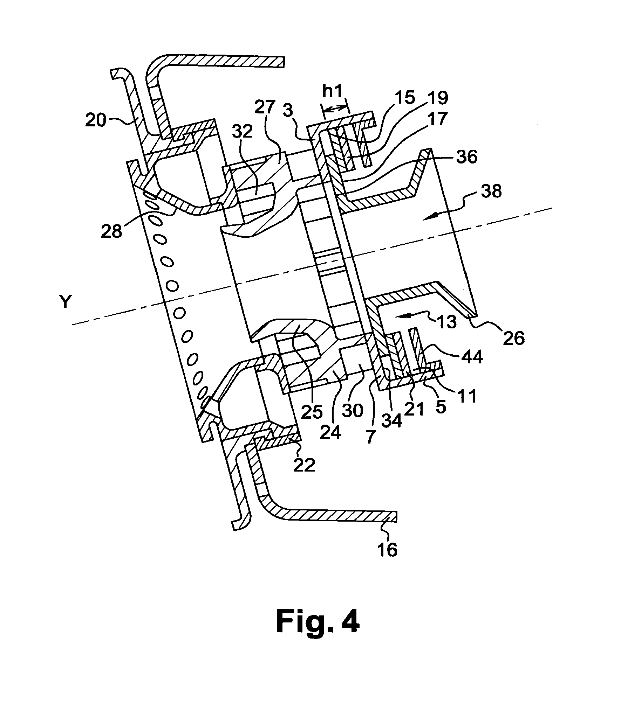

Comme on peut le voir plus en détail sur la figure 4, chaque système d'injection 1 comprend une partie fixe 3 qui comporte une cavité 11 délimitée par un fond 7, une paroi latérale 5 et une coupelle de fermeture 44. Le fond 7 est percé en son centre par un orifice cylindrique de sorte qu'il présente une forme de bague, tout comme la coupelle de fermeture 44. Ainsi, la cavité n'est pas complètement fermée. La paroi latérale 5 présente une forme cylindrique autour d'un axe de référence Y.

La partie fixe 3 comporte également une vrille 24, un venturi 25 et d'un bol 28. Le fond 7 forme un épaulement en saillie radiale de la vrille 24. La vrille 24 est montée sur le bol 28. Le bol 28 est raccordé au fond de chambre 16 par l'intermédiaire d'un déflecteur 20 et de deux demi-bagues 22. La vrille 24 comporte un premier et un deuxième étages d'ailettes ou de pales 30, 32 qui ont pour fonction d'entraîner l'air en rotation autour de l'axe de référence Y du système d'injection. ailettes ou pales des étages 30 et 32 peuvent être de même sens ou de sens contraire. La partie fixe 3 s'étend autour de l'axe de référence Y et elle présente une symétrie de révolution autour de cet axe.

Le système d'injection 1 comporte également une traversée coulissante 26 qui comporte une semelle 36. La semelle 36 de la traversée coulissante 26 est située dans la cavité 11 et elle est en appui sur le fond 7 de la cavité 11.

La traversée coulissante 26 comporte en outre une partie de centrage, par exemple un cône de centrage 38, destinée à centrer un injecteur de carburant 40 par rapport au système d'injection 1. La partie de centrage sort de la cavité par l'orifice situé au milieu de la coupelle de fermeture 44.

Le système d'injection 1 comporte en outre une rondelle 15 en appui sur la surface supérieure 17 de la semelle 36. Le système d'injection 1 comporte en outre des moyens de ressort 19 en appui sur la rondelle 15.

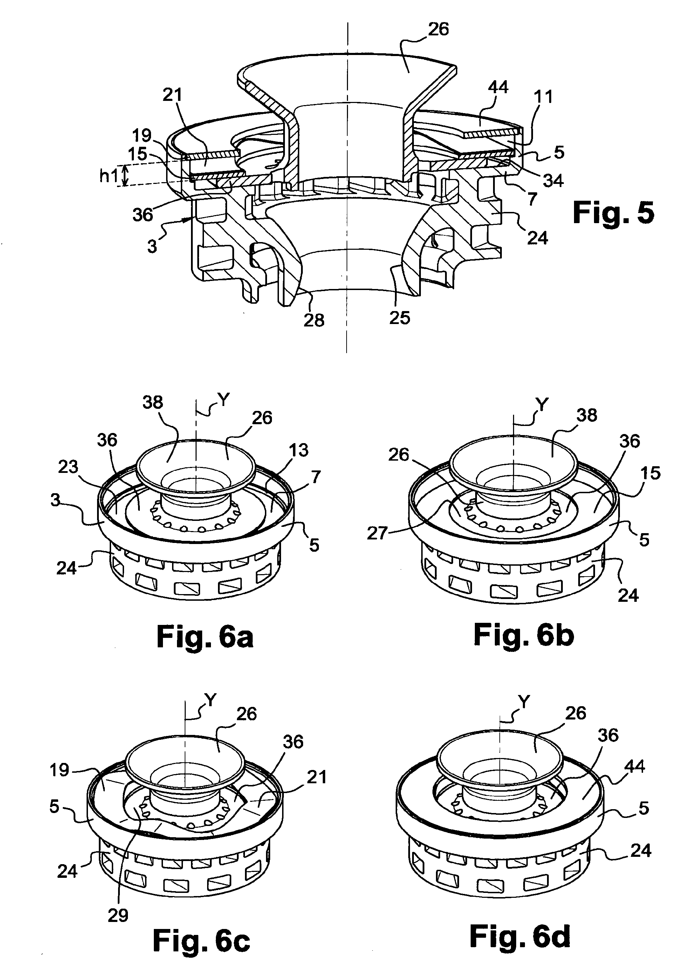

Comme on peut le voir plus précisément sur la figure 5, les moyens de ressort 19 sont formés par une lamelle ondulée 21 circulaire, en forme de bague. Les moyens de ressort présentent également une symétrie de révolution autour de l'axe de référence Y.

La lamelle ondulée 21 est de préférence formée d'un alliage métallique, supportant une température voisine de 600°Celcius, de préférence d'un alliage nickel-chrome, qui présente par exemple la composition suivante :

| | Ni | Cr | Fe | Mo | Nb | Co | Mn | Cu | Al | Ti | Si | C | S | P | B |
|---|---|---|---|---|---|---|---|---|---|---|---|---|---|---|---|
| Pourcentage massique | 50,0 - 55,0 | 17,0 - 21,0 | qsp 100 % | 2,80 - 3,30 | 4,75 - 5,50 | 1,0 max | 0,35 max | 0,30 max | 0,20-0,80 | 0,65 1,15 | 0,35 max | 0,08 max | 0,015 max | 0,015 max | 0,006 max |

La lamelle ondulée 21 présente de préférence des ondulations qui lui permettent d'entrer localement en contact avec la coupelle de fermeture 44 et avec la rondelle 19. Ces ondulations sont réparties circonférentiellement sur la lamelle ondulée.

La lamelle ondulée est contrainte axialement au montage entre la coupelle de fermeture 44 et la rondelle 15, de sorte qu'elle exerce un effort axial sur la semelle 36 de la traversée coulissante 26 par l'intermédiaire de la rondelle 15.

L'effort exercé par les moyens de ressort 19 sur la semelle 36 par l'intermédiaire de la rondelle 15 est choisi de façon à ce que, en l'absence de dilatation thermique, la traversée coulissante ne puisse pas se déplacer dans la cavité, mais que, en présence de dilatation thermique, la traversée coulissante puisse se déplacer radialement pour s'adapter à la dilatation thermique différentielle.

Ainsi, les moyens de ressort 19 maintiennent la semelle 36 plaquée axialement contre le fond 7 de la cavité, ce qui permet d'éviter les vibrations de la traversée coulissante et l'usure prématurée du nez de l'injecteur qui est inséré dans la traversée coulissante. En outre, les moyens de ressort peuvent se déformer en cas de dilatation thermique du système d'injection et/ou de l'injecteur.

La rondelle 15 permet de répartir l'effort exercé par les moyens de ressort sur la semelle 36. En outre, la rondelle 15 permet d'éviter que les moyens de ressort 19 ne se coincent entre la paroi latérale 5 de la cavité et la semelle 26 de la traversée coulissante.

Le système d'injection selon l'invention présente également la particularité d'avoir une cavité 11 qui présente une hauteur h1 selon l'axe Y supérieure à la hauteur des systèmes d'injection de l'art antérieur. En effet, selon l'invention la cavité 11 doit pouvoir contenir, outre la semelle 36, la rondelle 15 et les moyens de ressort 19. Pour cela, le fond 7 est abaissé à l'intérieur de la vrille 24, tandis que la coupelle de fermeture 44 reste dans la même position que les coupelles de fermeture des systèmes d'injection de l'art antérieur. En effet, la coupelle de fermeture 44 ne peut pas être déplacée pour ne pas modifier l'aérodynamisme des chemins 10 et 14 dans lequel les gaz circulent.

Un procédé d'assemblage selon l'invention va maintenant être décrit en détail en référence aux figures 6a à 6d.

La figure 6a représente une partie fixe 3 comportant une vrille 24 au dessus de laquelle se trouve un épaulement 23 qui forme le fond 7 d'un logement 13. Le fond 7 présente une forme de bague présentant une symétrie de révolution autour d'un axe de référence Y. Le fond 7 est entouré par une paroi latérale 5 cylindrique autour de l'axe de référence Y. La traversée coulissante 26 comporte elle une semelle 36 en forme de bague au dessus de laquelle se trouve un cône de centrage 38 destiné à recevoir le nez de l'injecteur 40. La traversée coulissante présente également une symétrie de révolution par rapport à l'axe de référence Y.

Lors d'une première étape (a), représentée sur la figure 6a, la traversée coulissante est mise en place sur la partie fixe 3 de façon à ce que la semelle 36 soit en appui sur le fond 7.

Lors d'une seconde étape (a'), représentée sur la figure 6b, une rondelle 15 est mise en place sur la surface supérieure de la semelle 36. La rondelle 15 présente un orifice central 27 par lequel sort le cône de centrage 38 de la traversée coulissante. La rondelle présente de préférence un diamètre extérieur sensiblement égal au diamètre intérieur de la cavité, de sorte que la rondelle est en contact avec les parois latérales 5 de la cavité.

Lors d'une troisième étape (b), représentée sur la figure 6c, des moyens de ressort 19 sont disposés sur la rondelle 15. Ces moyens de ressort sont constitués ici par une lamelle ondulée 21 circulaire métallique, présentant une forme de bague. La lamelle ondulée 21 présente un diamètre extérieur sensiblement égal au diamètre intérieur de la cavité, de sorte que la lamelle ondulée est en contact avec les parois latérales de la cavité. La lamelle ondulée 21 présente en son centre un orifice 29 de diamètre intérieur supérieur au diamètre extérieur du cône de centrage de la traversée coulissante, de sorte que, en cas de dilatation thermique différentielle, la lamelle ondulée puisse se déformer radialement sans être contrainte par les parois extérieures du cône de centrage. La rondelle 15 et la lamelle ondulée 21 entourent donc le cône de centrage sans le toucher.

Lors d'une quatrième étape (c), représentée sur la figure 6d, la coupelle de fermeture 44 est fixée à la paroi latérale 5 de façon à former une cavité 11 dans laquelle les moyens de ressort 11 sont contraints axialement entre la coupelle de fermeture 44 et la rondelle 15.

Pour cela, la coupelle de fermeture est par exemple soudée à la paroi latérale 5. La hauteur à laquelle la coupelle de fermeture 44 est fixée par rapport au fond de la cavité est calculée de façon à ce que les moyens de ressort exercent un effort sur la semelle suffisamment important pour éviter tout débattement de la traversée coulissante dans la cavité 11. Toutefois, l'effort de la précontrainte maximale appliquée par les moyens de ressort sur la semelle ne doit pas entraver le déplacement de la traversée coulissante par rapport à la partie fixe pour tolérer des dilatations différentielles.

Naturellement, l'invention n'est pas limitée aux modes de réalisation décrits ci-dessus en référence aux figures et des variantes pourraient être envisagées sans sortir du cadre de l'invention. Par exemple, la forme de la partie fixe n'est décrite qu'à titre indicatif et d'autres formes pourraient être envisagées. De même, la chambre de combustion pourrait présenter une autre géométrie sans sortir du cadre de l'invention. On pourrait également imaginer utiliser d'autres géométries pour les moyens de ressort sans sortir du cadre de l'invention.

## Revendications

1. Système d'injection (1) de carburant pour turbo-réacteur comportant une partie fixe (3) et une traversée coulissante (26), la partie fixe (3) et la traversée coulissante (26) s'étendant suivant un axe de référence (Y), la partie fixe (3) comportant une cavité (11) délimitée axialement par un fond (7) et une coupelle de fermeture (44), la traversée coulissante (26) étant pourvue d'une semelle (36) contenue dans la cavité (11), le système d'injection (1) étant **caractérisé en ce qu'**il comporte en outre des moyens de ressort (19) disposés dans la cavité (11) de façon à exercer un effort axial sur la semelle (36).

2. Système d'injection (1) selon la revendication précédente, **caractérisé en ce que** les moyens de ressort (19) comportent une lamelle ondulée (21).

3. Système d'injection (1) selon la revendication précédente, **caractérisé en ce que** la lamelle ondulée (21) est circulaire.

4. Système d'injection (1) selon l'une quelconque des revendications précédentes, **caractérisé en ce que** les moyens de ressort sont contraints axialement dans la cavité.

5. Système d'injection selon l'une quelconque des revendications précédentes, **caractérisé en ce qu'**il comporte en outre une rondelle (15) disposée entre les moyens de ressort (19) et la semelle (36).

6. Système d'injection (1) selon l'une quelconque des revendications précédentes, **caractérisé en ce que** les moyens de ressort (19) exercent sur la semelle (36) un effort compris entre 10 Newtons et 30 Newtons.

7. Chambre de combustion (2) comportant au moins un système d'injection (1) selon l'une quelconque des revendications précédentes, la traversée coulissante (26) comportant en outre un cône de centrage (38) dans lequel est inséré un injecteur (40) de carburant.

8. Moteur d'aéronef comportant une chambre de combustion selon la revendication précédente.

9. Procédé d'assemblage d'un système d'injection (1) comportant une partie fixe (3) et une traversée coulissante (26), la partie fixe (3) comportant un logement (13) présentant un fond (7), la traversée coulissante (26) comportant une semelle (36), le procédé comportant les étapes suivantes :
- (a) Mise en place de la traversée coulissante (26) sur la partie fixe (3) de façon à ce que la semelle (36) soit en appui sur le fond (7) du logement (13);
- (b) Mise en place des moyens de ressort (19); et
- (c) Fixation d'une coupelle de fermeture (44) sur le logement (13) de façon à former une cavité (11) dans laquelle les moyens de ressort (19) sont contraints axialement.

10. Procédé selon la revendication précédente, **caractérisé en ce qu'**il comporte en outre, entre les étapes (a) et (b), l'étape suivante :
- (a') Mise en place d'une rondelle (15) sur la semelle (36).

## Patentansprüche

1. Treibstoff-Einspritzsystem (1) für einen Turboreaktor, umfassend einen festen Teil (3) und eine gleitende Durchführung (26), wobei der feste Teil (3) und die gleitende Durchführung (26) sich gemäß einer Referenzachse (Y) erstrecken, wobei der feste Teil (3) eine Ausnehmung (11) umfasst, die axial durch einen Boden (7) und eine Verschlussschale (44) begrenzt ist, wobei die gleitende Durchführung (26) mit einer in der Ausnehmung (11) enthaltenen Sohle (36) versehen ist, wobei das Einspritzsystem (1) **dadurch gekennzeichnet ist, dass** es darüber hinaus Federmittel (19) umfasst, die in der Ausnehmung (11) derartig angeordnet sind, dass eine axiale Kraft auf die Sohle (36) ausgeübt wird.

2. Einspritzsystem (1) gemäß dem voranstehenden Anspruch, **dadurch gekennzeichnet, dass** die Federmittel (19) eine gewellte Lamelle (21) umfassen.

3. Einspritzsystem (1) gemäß dem voranstehenden Anspruch, **dadurch gekennzeichnet, dass** die gewellte Lamelle (21) kreisförmig ist.

4. Einspritzsystem (1) gemäß einem der voranstehenden Ansprüche, **dadurch gekennzeichnet, dass** die Federmittel axial in der Ausnehmung gespannt sind.

5. Einspritzsystem gemäß einem der voranstehenden Ansprüche, **dadurch gekennzeichnet, dass** es darüber hinaus eine Scheibe (15) umfasst, die zwischen den Federmitteln (19) und der Sohle (36) angeordnet ist.

6. Einspritzsystem (1) gemäß einem der voranstehenden Ansprüche, **dadurch gekennzeichnet, dass** die Federmittel (19) auf die Sohle (36) eine zwischen 10 Newton und 30 Newton inbegriffene Kraft ausüben.

7. Verbrennungskammer (2), umfassend wenigstens ein Einspritzsystem (1) gemäß einem der voranstehenden Ansprüche, wobei die gleitende Durchführung (26) darüber hinaus einen Zentrierungskegel (38) umfasst, in dem eine Kraftstoff-Einspritzdüse (40) eingefügt ist.

8. Luftschiff-Motor, umfassend eine Verbrennungskammer gemäß dem voranstehenden Anspruch.

9. Montageverfahren eines Einspritzsystems (1), umfassend einen festen Teil (3) und eine gleitende Durchführung (26), wobei der feste Teil (3) eine einen Boden (7) aufweisende Aufnahme (13) umfasst, wobei die gleitende Durchführung (26) eine Sohle (36) umfasst, wobei das Verfahren die folgenden Stufen umfasst:
- (a) Einsetzen der gleitenden Durchführung (26) auf dem festen Teil (3) derart, dass die Sohle (36) auf dem Boden (7) der Aufnahme (13) zum Aufstützen kommt;
- (b) Einsetzen der Federmittel (19); und
- (c) Befestigung einer Verschlussschale (44) auf der Aufnahme (13) derart, dass eine Ausnehmung (11) gebildet wird, in der die Federmittel (19) axial gespannt sind.

10. Verfahren gemäß dem voranstehenden Anspruch, **dadurch gekennzeichnet, dass** es darüber hinaus zwischen den Stufen (a) und (b) die folgende Stufe umfasst:
- (a') Einsetzen einer Scheibe (15) auf der Sohle (36).

## Claims

1. A fuel injection system (1) for a turbojet including a fixed part (3) and a sliding lead-through (26), the fixed part (3) and the sliding lead-through (26) extending along a reference axis (Y), the fixed part (3) including a cavity (11) axially bounded by a bottom (7) and a closing cup (44), the sliding lead-through (26) being provided with a shoe (36) contained in the cavity (11), the injection system (1) being **characterised in that** it further includes spring means (19) provided in the cavity (11) so as to exert an axial strain onto the shoe (36).

2. The injection system (1) according to the preceding claim, **characterised in that** the spring means (19) include a wavy leaf (21).

3. The injection system (1) according to the preceding claim, **characterised in that** the wavy leaf (21) is circular.

4. The injection system (1) according to any of the preceding claims, **characterised in that** the spring means are axially stressed in the cavity.

5. The injection system according to any of the preceding claims, **characterised in that** it further includes a washer (15) provided between the spring means (19) and the shoe (36).

6. The injection system (1) according to any of the preceding claims, **characterised in that** the spring means (19) exert onto the shoe (36) a strain between 10 Newtons and 30 Newtons.

7. A combustion chamber (2) including at least one injection system (1) according to any of the preceding claims, the sliding lead-through (26) further including a centring cone (38) wherein a fuel injector (40) is inserted.

8. An aircraft engine including a combustion chamber according to the preceding claim.

9. A method for assembling an injection system (1) including a fixed part (3) and a sliding lead-through (26), the fixed part (3) including a housing (13) having a bottom (7), the sliding lead-through (26) including a shoe (36), the method including the following steps of:
- (a) placing the sliding lead-through (26) onto the fixed part (3) such that the shoe (36) bears against the bottom (7) of the housing (13);
- (b) placing the spring means (19); and
- (c) attaching a closing cup (44) onto the housing (19) so as to form a cavity (11) wherein the spring means (19) are axially stressed.

10. The method according to the preceding claim, **characterised in that** it further includes, between steps (a) and (b), the following step of:
- (a') placing a washer (15) onto the shoe (36).
